# EUROPEAN PATENT SPECIFICATION

(11) **EP 4 007 246 B1**
(45) Date of publication and mention of the grant of the patent: **17.12.2025**
(21) Application number: 20847719.0
(22) Date of filing: 30.06.2020
(51) Int. Cl.: H04M 1/72436, G06F 40/279, G06F 40/30, G06Q 10/107, H04L 51/214

(54) **MESSAGE SENDING METHOD AND TERMINAL DEVICE**
NACHRICHTENSENDEVERFAHREN UND ENDGERÄT
PROCÉDÉ D'ENVOI DE MESSAGES ET DISPOSITIF TERMINAL

(30) Priority: 31.07.2019 CN 201910701027
(43) Date of publication of application: 01.06.2022
(73) Proprietor: Vivo Mobile Communication Co., Ltd., Dongguan, Guangdong 523860 (CN)
(72) Inventor: LIU, Quancai, Dongguan, Guangdong 523860 (CN); TANG, Jie, Dongguan, Guangdong 523860 (CN)
(74) Representative: Lavoix
(86) International application number: PCT/CN2020/099517
(87) International publication number: WO 2021/017737

(56) References cited:
- CN-A- 104 853 027
- CN-A- 106 454 755
- CN-A- 107 070 783
- CN-A- 108 737 653
- CN-A- 110 505 340
- US-A1- 2005 004 984
- US-A1- 2013 124 662
- US-A1- 2015 312 197
- US-A1- 2016 062 984

## Description

### CROSS-REFERENCE TO RELATED APPLICATION

This application claims priority to Chinese Patent Application No. 201910701027.6, filed in China on July 31, 2019.

### TECHNICAL FIELD

Embodiments of this disclosure relate to the field of terminal technologies, and in particular, to a message sending method and a terminal device.

### BACKGROUND

With development of terminal technologies, a user can use a terminal device to send a message to another user.

Generally, if the user needs to share or forward a message to other users, the user may first select contacts to which the message is to be sent. After the contacts to which the message is to be sent are selected, if the user clicks to confirm sending, the terminal may send the message to these contacts. If the user originally wants to send message 1 to contact 1, but clicks on contact 2, the terminal device will send message 1 to contact 2. At present, if the user finds within a specified period of time that the message 1 has been sent to a wrong recipient, the user can trigger the terminal device to use the withdrawal function to withdraw the message 1.

However, if after the specified period of time, the user discovers that the message has been sent to a wrong recipient, the terminal is unable to operate to withdraw the sent message, which results in a relatively high probability of mis-sending a message by the terminal.

D1 (US 2016/0062984 A1) discloses that a device includes a processor, a touch-enabled display accessible to the processor, and a memory accessible to the processor. The memory bears instructions executable by the processor to receive first input pertaining to at least a first recipient to which a message is to be sent, receive second input pertaining to a body of the message, and parse at least a portion of the body of the message to determine, based on at least a portion of the body of the message to determine, based on at least a portion of the body of the message, whether the first recipient is a correct recipient for the message.

### SUMMARY

Embodiments of this disclosure provide a message sending method and a terminal device, to resolve a problem of a relatively high probability of mis-sending a message by the terminal.

To resolve the foregoing technical problem, the embodiments of this disclosure are implemented as follows.

According to a first aspect, an embodiment of this disclosure provides a message sending method, which is defined in claim 1.

According to a second aspect, an embodiment of this disclosure further provides a terminal device, which is defined in claim 7.

Further advantageous embodiments of the present disclosure are indicated in the dependent claims.

It is to be understood that both the foregoing general description and the following detailed description are exemplary only, and are not restrictive of the present disclosure.

### BRIEF DESCRIPTION OF DRAWINGS

FIG. 1 is a possible schematic architectural diagram of an Android operating system according to an embodiment of this disclosure;
FIG. 2 is a schematic flowchart of a message sending method according to an embodiment of this disclosure;
FIG. 3A is a schematic diagram of a display screen according to an embodiment of this disclosure;
FIG. 3B is a schematic diagram of another display screen according to an embodiment of this disclosure;
FIG. 3C is a schematic diagram of another display screen according to an embodiment of this disclosure;
FIG. 4 is a possible schematic structural diagram of a terminal device according to an embodiment of this disclosure;
FIG. 5 is a possible schematic structural diagram of another terminal device according to an embodiment of this disclosure;
FIG. 6 is a possible schematic structural diagram of another terminal device according to an embodiment of this disclosure;
FIG. 7 is a possible schematic structural diagram of another terminal device according to an embodiment of this disclosure;
FIG. 8 is a schematic diagram of a hardware structure of a terminal device according to the embodiments of this disclosure.

### DESCRIPTION OF EMBODIMENTS

The following clearly and completely describes the technical solutions in the embodiments of this disclosure with reference to the accompanying drawings in the embodiments of this disclosure. Apparently, the described embodiments are some rather than all of the embodiments of this disclosure.

It should be noted that "/" in this specification represents or, for example, A/B may represent A or B; and that the term "and/or" in this specification describes only an association relationship for describing associated objects and represents that three relationships may exist, for example, A and/or B may represent the following three cases: A alone, both A and B, and B alone. "Plurality" means two or more.

In the specification of the embodiments and the claims of this disclosure, the terms "first", "second", and so on are intended to distinguish between different objects but do not indicate a particular order of the objects. For example, a first keyword, a second keyword, and the like are used to distinguish different keywords, rather than describe a specific sequence of the keywords.

It should be noted that, in the embodiments of this disclosure, terms such as "an example" or "for example" are used to represent an example, an instance, or an illustration. Any embodiment or design solution described as "an example" or "for example" in the embodiments of this disclosure shall not be interpreted as being preferred or advantageous over other embodiments or design solutions. Specifically, the terms such as "an example" or "for example" are used to present related concepts in a specific manner.

A terminal device in the embodiments of this disclosure may be a terminal with an operating system. The operating system may be an Android operating system, may be an iOS operating system, or may be another possible operating system, which is not specifically limited in the embodiments of this disclosure.

In the message sending method provided in the embodiments of this disclosure, firstly, the terminal device may obtain message content input by a user and contacts selected by the user. The terminal device may send the message content only to a contact that does not meet a preset condition among the contacts selected by the user, or the terminal device sends the preset content to a contact that meets the preset condition among the contacts selected by the user. Alternatively, the terminal device sends the message content to a contact that does not meet a preset condition among the contacts selected by the user, and sends the preset content to a contact that meets the preset condition among the contacts selected by the user. The preset condition may filter contacts with a relatively high probability of mis-sending. Therefore, the terminal device may send the message content input by the user to a contact with a relatively low probability of mis-sending among the contacts selected by the user, and send the preset content to a contact with a relatively high probability of mis-sending among the contacts selected by the user (that is, not send the message content input by the user). In this way, the probability of mis-sending the message can be reduced, thereby reducing a probability of mis-sending important data.

The following uses the Android operating system as an example to introduce a software environment to which a message sending method provided in the embodiments of this disclosure is applied.

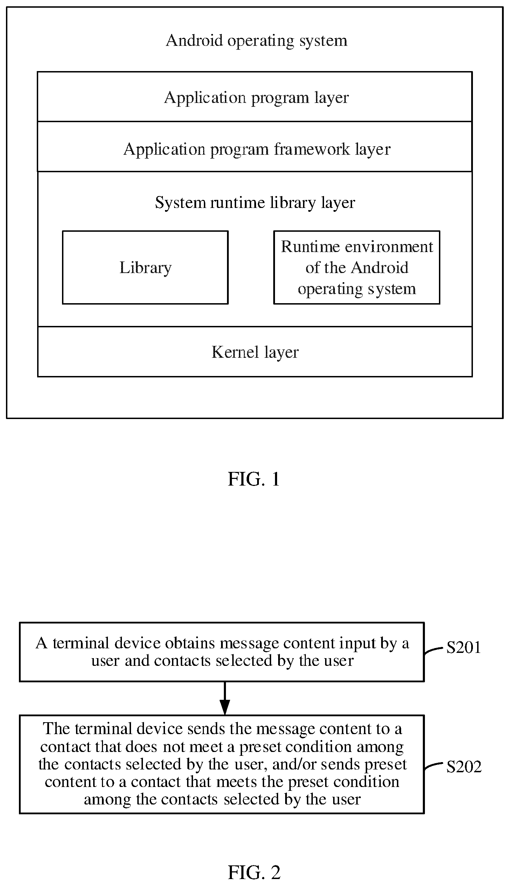

FIG. 1 is a possible schematic architectural diagram of an Android operating system according to an embodiment of this disclosure. In FIG. 1, an architecture of the Android operating system includes four layers: an application layer, an application framework layer, a system runtime library layer, and a kernel layer (which may be specifically a Linux kernel layer).

The application program layer includes various application programs (including system application programs and third-party application programs) in the Android operating system.

The application program framework layer is a framework of application programs, and developers may develop some application programs based on the application program framework layer in compliance with development principles of the framework of application programs.

The system runtime library layer includes a library (also called a system library) and a runtime environment of the Android operating system. The library mainly provides various resources required by the Android operating system. The runtime environment of the Android operating system is used to provide a software environment for the Android operating system.

The kernel layer is an operating system layer of the Android operating system, and is a bottom layer in software layers of the Android operating system. The kernel layer provides core system services and hardware-related drivers for the Android operating system based on the Linux kernel.

Using the Android operating system as an example, in the embodiments of this disclosure, a developer may develop, based on the system architecture of the Android operating system shown in FIG. 1, a software program for implementing the message sending method provided in the embodiments of this disclosure, so that the message sending method can be performed based on the Android operating system shown in FIG. 1. In other words, a processor or a terminal device may implement the message sending method provided in the embodiments of this disclosure by running the software program in the Android operating system.

The following describes the message sending method in the embodiments of this disclosure with reference to FIG. 2. FIG. 2 is a schematic flowchart of a message sending method according to an embodiment of this disclosure. As shown in FIG. 2, the message sending method includes S201 and S202.

S201. A terminal device obtains message content input by a user and contacts selected by the user.

The message content input by the user is message content to be sent, which may be message content that is forwarded by the user from another contact, or message content to be shared by the user with other contacts, or message content manually input by the user, which is not specifically limited in the embodiments of this disclosure.

Optionally, a type of message content may be text type, picture type, audio type, video type, link type, and the like.

S202. The terminal device sends the message content to a contact that does not meet a preset condition among the contacts selected by the user, and/or sends preset content to a contact that meets the preset condition among the contacts selected by the user.

The preset condition may be used by the terminal device to determine which contacts among the contacts selected by the user may be wrongly selected contacts. For example, the terminal device may select, based on the preset condition, contacts with a relatively high probability of mis-sending, which means that the user may not want to send the message content to these contacts.

In this embodiment of this disclosure, the terminal device may identify different contacts based on contact identifications. For example, contact identification may be an identity ID of a contact. For example: a remark name, a mobile phone number, a QQ number, a WeChat ID, or an email number.

Optionally, the terminal device may determine whether a contact meets the preset condition based on an identification of the contact and message content. For example, the terminal device may identify content in the message content and the identification of the contact through semantic recognition or image recognition. For example, the terminal device may use image recognition to obtain information in a picture, the terminal device may use semantic recognition to obtain information in a text, and the terminal device may use semantic to identify the identification of the contact.

Optionally, in the message sending method provided in this embodiment of this disclosure, the foregoing S202 may specifically be the following S202a, S202b, or S202c.

S202a. The terminal device sends the message content to a contact that does not meet a preset condition among the contacts selected by the user.

It can be understood that the contact that does not meet the preset condition is a contact with a relatively low probability of mis-sending when the message content input by the user is sent.

Based on this solution, the terminal device only sends the message content to the contact that does not meet the preset condition among the contacts selected by the user, which means that the terminal device sends the message content only to the contact with a low probability of mis-sending, thereby reducing a probability of mis-sending important messages or important data.

S202b. The terminal device sends preset content to a contact that meets a preset condition among the contacts selected by the user.

It can be understood that the contact that meets the preset condition is a contact with a relatively high probability of mis-sending when the message content input by the user is sent.

Optionally, the preset content may be some simple greetings, regards, or the like, such as "How is your life going?", and "How is your work going?".

Based on this solution, the terminal device sends the preset content to the contact that meets the preset condition among the contacts selected by the user, that is, replacing the message content input by the user with the preset content, thereby reducing the probability of mis-sending the message.

S202c. The terminal device sends the message content to a contact that does not meet a preset condition among the contacts selected by the user, and sends preset content to a contact that meets the preset condition among the contacts selected by the user.

Based on this solution, when the terminal device sends a message according to the contacts selected by the user and the message content input by the user, the terminal device may send the message content to a contact that does not meet the preset condition among the contacts selected by the user, and send the preset content to a contact that meets the preset condition. To be specific, the terminal device sends the message content input by the user to a contact with a relatively low probability of mis-sending among the contacts selected by the user, and send the preset content to a contact with a relatively high probability of mis-sending among the contacts selected by the user (that is, not send the message content input by the user), thereby reducing the probability of mis-sending the message and further reducing a probability of mis-sending important data.

In the message sending method provided in this embodiment of this disclosure, firstly, the terminal device may obtain message content input by a user and contacts selected by the user. The terminal device may send the message content only to a contact that does not meet a preset condition among the contacts selected by the user, or the terminal device sends the preset content to a contact that meets the preset condition among the contacts selected by the user. Alternatively, the terminal device sends the message content to a contact that does not meet a preset condition among the contacts selected by the user, and sends the preset content to a contact that meets the preset condition among the contacts selected by the user. The preset condition may filter contacts with a relatively high probability of mis-sending. Therefore, the terminal device may send the message content input by the user to a contact with a relatively low probability of mis-sending among the contacts selected by the user, and send the preset content to a contact with a relatively high probability of mis-sending among the contacts selected by the user (that is, not send the message content input by the user). In this way, the probability of mis-sending the message can be reduced, thereby reducing a probability of mis-sending important data.

Optionally, in the message sending method provided in this embodiment of this disclosure, after the foregoing S201 is performed, the method may include the following S203.

S203. The terminal device determines whether M contacts meet the preset condition.

The M contacts are contacts that are selected by the user to send the message content input by the user to.

Optionally, in this embodiment of this disclosure, the preset condition may include at least one of a first condition, a second condition, and a third condition. The first condition is that a message time interval is greater than or equal to a target time interval. The second condition is that a contact identification includes a first keyword, and that target content includes a second keyword. The third condition is that the target content includes a third keyword, and that an intimacy index is less than or equal to a target intimacy index corresponding to the third keyword. The message time interval is a time interval between the last time the user sent a message to a contact and a system time of the terminal device; the first keyword is associated with a target keyword set, and the second keyword is a keyword in the target keyword set; and the third keyword indicates a degree of intimacy or indicates private information, and the intimacy index is a frequency of contact between the user and a contact within a preset period of time.

For the first condition
It can be understood that the message time interval corresponding to a contact is a time interval between a moment 1 at which the user lately sent a message to the contact and the terminal device system time, denoted by a moment 2.

Optionally, in this embodiment of this disclosure, a unit of the message time interval can use 1 hour as a time unit, or 24 hours as the time unit, or 72 hours as the time unit, which is not specifically limited in this embodiment of this disclosure.

For example, assuming that the target time interval is 30 days, the terminal device may determine whether a contact meets the first condition based on whether the message time interval of the user corresponding to the contact is greater than or equal to 30 days. If the message time interval corresponding to a contact is greater than or equal to 30 days, the contact meets the first condition. If the message time interval corresponding to a contact is less than 30 days, the contact does not meet the first condition.

Assuming that the user selected 3 contacts (that is, M=3), a first time interval corresponding to a first contact is 30 days, a second time interval corresponding to a second contact is 10 days, and a third time interval corresponding to a third contact is 15 days. A contact that meets the first condition is the first contact. To be specific, the terminal device may display prompt information to prompt the user whether to send the message content input by the user to the first contact.

For the second condition
A contact identification includes the first keyword, which may represent that the user needs to pay attention to wording when sending messages to these contacts. For example, an X company group, and a party member group of an X company. Assuming that the first keyword is "party member", and the first target keyword set may be {Darling, kiss you}. If the second keyword is a keyword in the first target keyword set, the contact is a contact that meets the second condition.

For example, a group is named as "a party member group of an X company", and the group name includes the keyword "party member". If the message content input by the user is "Dear, have you eaten yet?", the terminal device may display prompt information to the user, prompting whether to send "Dear, have you eaten yet?" to the group.

For the third condition
Intimacy index: If the preset period of time is X days, an intimacy index between the user and a contact may be the number of days in which messages have been sent between the user and the contact during latest X days. If message sending or receiving has occurred in a day, the intimacy index corresponding to that day is 1, and if neither message sending nor message receiving has occurred in a day, intimacy index corresponding to that day is 0. The largest intimacy index corresponding to X days is X, and the smallest intimacy index is 0.

For example, if the terminal device identifies that the message content input by the user includes a keyword indicating intimacy such as "dear", "husband", and "wife", the terminal device determines whether the intimacy index of each of the contacts selected by the user is less than a first target intimacy index.

Assuming that the first target intimacy index is 10. When a keyword indicating intimacy appears in the first content, if the intimacy index between a contact selected by the user and the user is less than 10, the contact is a contact that meets the third condition.

If the terminal device identifies that the message content input by the user includes a keyword indicating private information such as "salary", "bonus", and "hidden disease", the terminal device determines whether the intimacy index of each of the contacts selected by the user is less than a second target intimacy index.

Assuming that the second target intimacy index is 20. When a keyword indicating private information appears in the first content, if the intimacy index between a contact selected by the user and the user is less than 20, the contact is a contact that meets the third condition.

Certainly, the user alternatively may manually add or remove a keyword that requires determining the intimacy index. The user alternatively may set different target intimacy indexes corresponding to keywords indicating different information, which is not specifically limited in this embodiment of this disclosure.

Optionally, the terminal device may use only one of the foregoing three conditions as the preset condition, or may use two of them as the preset condition, or may use foregoing three conditions as the preset condition, and the foregoing S203 may be specifically implemented through any one of the following.
(1) The terminal device may determine whether M contacts meet the preset condition based on the first condition.
(2) The terminal device may determine whether M contacts meet the preset condition based on the second condition.
(3) The terminal device may determine whether M contacts meet the preset condition based on the third condition.
(4) The terminal device may determine whether M contacts meet the target condition based on the first condition and the second condition.
(5) The terminal device may determine whether M contacts meet the target condition based on the first condition and the third condition.
(6) The terminal device may determine whether M contacts meet the target condition based on the second condition and the third condition.
(7) The terminal device may determine whether M contacts meet the target condition based on the first condition, the second condition, and the third condition.

It should be noted that if the terminal device uses any two of the first condition, the second condition, and the third condition as the preset condition, the terminal device may determine a contact that meets the first condition of the two conditions and a contact that meets the second condition of the two conditions as contacts that meet the preset conditions. If the terminal device uses the first condition, the second condition, and the third condition as the preset conditions, the terminal device may first determine whether each contact is a contact that meets the first condition, if there is a contact that does not meet the first condition, the terminal device may determine whether the contact that does not meet the first condition is a contact that meets the second condition, and if there is a contact that does not meet the first condition and the second condition, the terminal device may determine whether the contact that does not meet the first condition and the second condition is a contact that meets the third condition. That is, among the M contacts, a contact that meets the first condition, a contact that meets the second condition, and a contact that meets the third condition are contacts that meet the preset condition.

Any one of the first condition, the second condition, and the third condition can be used as the first condition of determination.

In this embodiment of this disclosure, the terminal device may determine whether a contact is a contact that meets the preset condition based on the first condition, the second condition, or the third condition. Because the first condition is determined based on the message time interval, the second condition is determined based on the keyword in contact identification and the keyword in the message content input by the user, and the third condition is determined based on the intimacy between the user and the contact and the keyword in the message content input by the user, that is, the terminal device may determine from different perspectives whether a contact is a contact that meets the preset conditions, an accuracy by which the terminal device determines that a contact is a wrongly selected contact can be increased.

Optionally, in the case that the preset condition includes the first condition, the second condition, and the third condition, in the message sending method provided in this embodiment of this disclosure, the foregoing S203 may be specifically performed through S203a to S203c.

S203a. The terminal device determines whether M contacts meet the first condition.

S203b. In the case that among the M contacts, there are K contacts that do not meet the first condition, the terminal device determines whether the K contacts meet a first target condition.

The first target condition is any one of the second condition and the third condition, and K is a positive integer less than M.

S203c. In the case that among the K contacts, there are P contacts that do not meet the first target condition, the terminal device determines whether the P contacts meet a second target condition.

The second target condition is a condition of the second condition and the third condition except the first target condition, and P is a positive integer less than K.

Further, the terminal device determines a contact that meets the first condition, a contact that meets the second condition, and a contact that meets the third condition as contacts that meet the preset condition.

It can be understood that the terminal device may follow a specific order of determination. For example, in this embodiment of this disclosure, it is first determined that whether the first condition is met, and then a determination is made based on the second condition or the third condition for a contact that does not meet the first condition, so as to determine which contacts are those that meet the preset conditions.

Based on this solution, the terminal device may first determine whether the M contacts meet the first condition, and then in the case that among the M contacts, there are N contacts that do not meet the first condition, the terminal device may determine whether the contacts that do not meet the first condition meet the second condition or the third condition. Determining based on a plurality of conditions may improve accuracy of a message from the terminal device indicating mis-sending. In this way, after selecting the contacts and before sending the message content input by the user, the user may determine again whether to send the message content input by the user to a contact who meets the preset condition.

Optionally, in the message sending method provided in this embodiment of this disclosure, the foregoing S201 may specifically be performed through the following S201a.

S201a. In the case that a first input is received, a terminal device obtains message content input by a user and contacts selected by the user.

The first input is an input of the message content input by the user in an input area, or an input that the user triggers the terminal device to select a contact and send the message content.

Example 1. After a terminal device detects that a user inputs message content in an input area corresponding to a contact, the terminal device may determine whether the contact meets a preset condition.

Example 2. After a terminal device detects that a user pastes message content to an input area corresponding to a contact, the terminal device may also determine whether the contact meets a preset condition.

Example 3. After a terminal device detects that a user has selected M contacts to which message content is to be sent, and detects an input that triggers the terminal device to send the message content to the M contacts, the terminal device may also determine whether the M contacts meet a preset condition.

It should be noted that in this embodiment of this disclosure, after the user selects a message to be sent, the terminal device also determines whether the selected M contacts include a contact that meets the preset condition.

In this embodiment of this disclosure, the terminal device obtains the message content input by the user and the contacts selected by the user at different times, and then determine whether the contacts selected by the user are contacts that meet the preset condition.

In the message sending method provided in this embodiment of this disclosure, after the foregoing S202 is performed, the method further includes the following S204.

S204. The terminal device displays a first prompt information.

The first prompt information is used to prompt whether to send the message content input by the user to a contact that meets the preset condition.

In this embodiment of this disclosure, target content includes at least one of the message content input by the user and the preset content.

It can be understood that after the terminal device sends the preset content to the contact that meets the preset condition, and/or after the terminal device sends the message content input by the user to the contact that does not meet the preset condition, the terminal device may display the first prompt information, prompting the user whether to send the message content input by the user to the contact that meets the preset condition. This can allow the user to reconfirm whether the message needs to be sent to these contacts, so as to avoid a problem that the user actually needs to send the message content to some or all of these contacts, but the terminal device does not send the message content to these contacts.

Optionally, in the message sending method provided in this embodiment of this disclosure, after the foregoing S203 is performed, the method may further include the following S205.

S205. The terminal device displays a second prompt information.

The second prompt information is used to prompt user whether to send the message content to N contacts that meet the preset condition, where N is a positive integer.

It can be understood that in this solution, the preset condition can also be used to filter a contact that needs to be prompted.

For example, the terminal device may display a sub-screen on the current display screen, and display the second prompt information on the sub-screen.

Optionally, the second prompt information displayed by the terminal device may not include an identification of a contact that meets the preset condition, or may include an identification of a contact that meets the preset condition, which is not specifically limited in this embodiment of this disclosure.

For example, content of the second prompt message may specifically include: prompting the user whether to cancel sending the message content input by the user, prompting the user whether to cancel sending the message content input by the user to a contact that meets the preset conditions, prompting the user whether to reselect a contact, prompting the user of a contact identification of a contact that meets the preset condition, and prompting whether to cancel sending the message content input by the user to a contact that meets the preset condition.

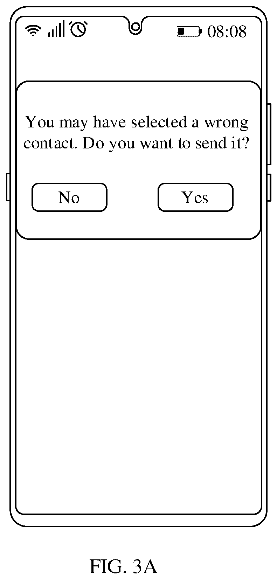

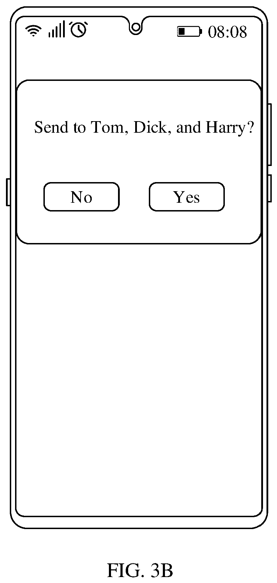

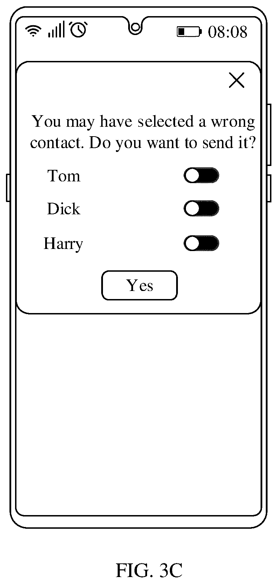

For example, FIGs. 3A to 3B are schematic diagrams of a display screen according to an embodiment of this disclosure. As shown in FIG. 3A, the terminal device displays "You may have selected a wrong contact. Do you want to send it?" on the display screen. Certainly, the terminal device may alternatively display "Send to Tom, Dick, and Harry?" on the display screen, as shown in FIG. 3B. Certainly, in the case that the contacts that meet the preset conditions are a plurality of contacts, the terminal device may further display a whether-to-send control for each contact. For example, as shown in FIG. 3C, the terminal device may display on the screen "You may have selected a wrong contact. Do you want to send it?", identifications of the contacts "Tom", "Dick", and "Harry", and a selection control corresponding to each identification. If the user needs to send the message content input by the user to at least one of them, the user may manipulate the selection control corresponding to the identification of each contact to select a contact corresponding to the contact identification. Then by clicking a control "Yes" for continuing to send the message, the message content input by the user may continue to be sent to the selected contact.

Optionally, the terminal device may display the second prompt information in a specific format to prompt the user.

For example, the terminal device uses bold text to display the second prompt information; the terminal device may use text in a specific color to display the second prompt information, such as red and yellow, and certainly, the terminal device may alternatively display the second prompt information in both bold and red text, which is not specifically limited in this embodiment of this disclosure.

Optionally, the sub-screen of the second prompt information may pop up in a specific manner, for example, displayed on the current screen in pop-up manner from top to bottom, from bottom to top, from left to right, or from right to left.

In the message sending method provided in this embodiment of this disclosure, firstly, the terminal device determines the contact that meets the preset condition among the M contacts, and then, the terminal device displays the second prompt information, where the second prompt information is used to prompt the user whether to send the message content input by the user to the contact that meets the preset condition. Because the message sending method provided in this embodiment of this disclosure may detect whether the M contacts meet the preset condition before sending the message content, and in the case that there is a contact that meets the preset condition, the terminal device may display the second prompt message to prompt the user whether to send the message content input by the user to the contact that meets the preset condition, so that the user may confirm whether there is a wrongly selected contact among the selected contacts before sending the message, thereby reducing the probability of mis-sending the message.

Optionally, in the message sending method provided in this embodiment of this disclosure, after the foregoing S205 is performed, the method may further perform the following S206.

S206. The terminal device receives a second input by the user for the second prompt information.

The second input is an input by the user that determines to cancel sending the message content input by the user to some contacts.

It can be understood that after the user determines, based on the displayed second prompt information, that the message content input by the user does not need to be sent to some contacts, the user may input the second input.

Further, S202 may be performed through the following S202c1 or S202c2.

S202c1. In response to the second input, the terminal device cancels sending the message content to N contacts.

In other words, the terminal device may cancel sending the message content input by the user to the N contacts prompted by the second prompt information according to the user input.

For example, assuming that the user selects to send message 1 to contact 1, contact 2, contact 3, and contact 4, and that the terminal device determines that the contact 1 and contact 4 are contacts that meet the preset condition, the prompt information is used to prompt the user to cancel sending the message 1 to the contact 3 and contact 4. If the user determines that the contact 1 and contact 2 are contacts to which the message 1 needs not to be sent, the user controls the terminal device to cancel sending the message 1 to contact 1 and contact 2.

It should be noted that in the case that the terminal device cancels sending the message content to a contact that meets the preset conditions, the terminal device may cancel sending the message content input by the user only to a contact that meets the preset conditions or to all contacts.

In this embodiment of this disclosure, in the case that the terminal device displays the second prompt information, the user may be prompted that these contacts may be the contacts that the user has wrongly selected. If the user determines that there is no need to send the message to some of the contacts, the user may input the second input for the second prompt information, so that the terminal device may cancel sending the message content to these prompted contacts, and the user may reconfirm whether the contacts have been selected correctly, thereby reducing the probability of mis-sending the message.

S202c2. In response to the second input, the terminal device cancels sending the message content to N contacts, and sends the message content to contacts among the M contacts except the N contacts.

For example, assuming that the user selects to send message 1 to contact 1, contact 2, contact 3, and contact 4, and that the terminal device determines that the contact 1 and contact 4 are contacts that meet the preset condition, the prompt information is used to prompt the user to cancel sending the message 1 to the contact 3 and contact 4. If the user determines that the contact 1 and contact 2 are contacts to which the message 1 needs not to be sent, the user may select to send the message 1 only to the contact 3 and contact 4.

In this embodiment of this disclosure, in the case that the terminal device displays the second prompt message to prompt the user that contacts that meet the preset condition may be two new contacts wrongly selected by the user, if the user determines that there is no need to send a first message to the contacts that meet the preset condition and wants to continue to send the first message to other contacts among the selected contacts, the user may trigger the terminal device according to the second input to cancel sending the message content input by the user to the contact that meet the preset condition, and send the message content input by the user to other contacts among the M contacts except those that meet the preset condition, without the necessity to return to reselect contacts by the user, which improves sending experience of the user.

Optionally, in the message sending method provided in this embodiment of this disclosure, after S205 is performed, the method may further include the following S207.

S207. The terminal device receives a third input by the user for the second prompt information.

The second input information includes identifications of the N contacts.

Specifically, the third input may be an input for at least one contact among the N contacts selected by the user.

Further, S202 may be specifically performed through the following S202d.

S202d. In response to the third input, the terminal device sends the message content input by the user to J contacts.

The J contacts include other contacts among the M contacts except the N contacts and at least one contact among the N contacts that corresponds to the third input, where J is a positive integer greater than N and less than or equal to M.

For example, assuming that the terminal device displays the second prompt information as shown in FIG. 3C, the user can select Tom and Dick in FIG. 3C, and then click OK, so that the terminal device may send the message to the contacts except Harry.

Certainly, after the second prompt information is displayed, the user may further determine whether among the M contacts, the contact that is not prompted by the terminal device is a contact that has been wrongly selected.

Based on this solution, after the terminal device displays the second prompt information, if the user finds that some contacts have been wrongly selected, and some contacts are the right ones, the user may select to continue to send the message content input by the user to those right contacts.

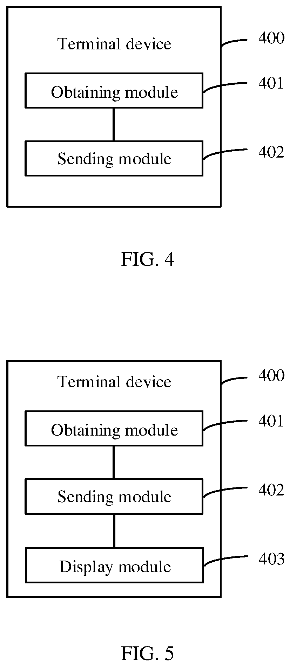

FIG. 4 is a possible schematic structural diagram of a terminal device according to an embodiment of this disclosure. As shown in FIG. 4, the terminal device 400 includes an obtaining module 401 and a sending module 402. The obtaining module 401 is configured to obtain message content input by a user and contacts selected by the user. The sending module 402 is configured to send the message content to a contact that does not meet a preset condition among the contacts, and/or send preset content to a contact that meets the preset condition among the contacts.

Optionally, with reference to FIG. 4, and as shown in FIG. 5, the terminal device 400 further includes a display module 403. The display module 403 is configured to, after the sending module 402 sends target content, display second prompt information, where the second prompt information is used to prompt whether to send the message content to a contact that meets the preset condition, and the target content includes at least one of the message content and the preset content.

Optionally, the preset condition includes at least one of a first condition, a second condition, and a third condition, where the first condition is that a message time interval is greater than or equal to a target time interval; the second condition is that a contact identification includes a first keyword, and that the message content includes a second keyword; and the third condition is that the message content includes a third keyword, and that an intimacy index is less than or equal to a target intimacy index corresponding to the third keyword. The message time interval is a time interval between the last time the user sent a message to a contact and a system time of the terminal device; the first keyword is associated with a target keyword set; and the second keyword is a keyword in the target keyword set; and the third keyword indicates a degree of intimacy or indicates private information, and the intimacy index is a frequency of contact between the user and a contact within a preset period of time.

Optionally, the obtaining module 401 is specifically configured to: obtain message content input by a user and contacts selected by the user in the case of a first input is received, where the first input is an input of the message content input by the user in an input area, or an input that the user triggers the terminal device to select M contacts and send the message content.

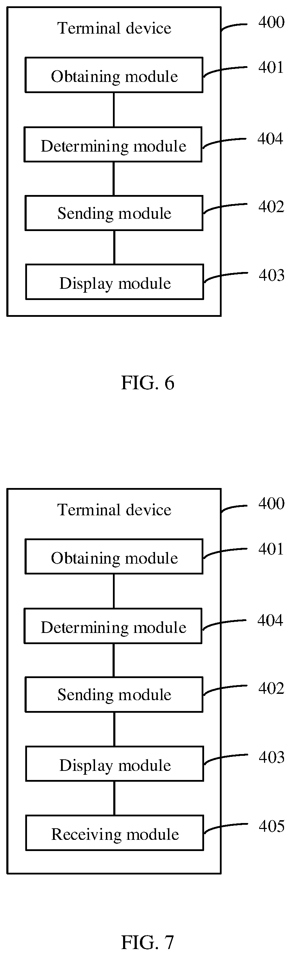

Optionally, with reference to FIG. 5, and as shown in FIG. 6, the terminal device 400 further includes: a determining module 404. The determining module 404 is configured to, after the obtaining module 401 obtains the message content input by the user and the contacts selected by the user, determine whether M contacts meet the preset condition, where the M contacts are the contacts selected by the user, and M is a positive integer.

Optionally, with reference to FIG. 6, and as shown in FIG. 7, the terminal device 400 further includes: a display module 403 and a receiving module 405. The display module 403 is configured to, after the determining module 404 determines whether the M contacts meet the preset condition, display second prompt information, where the second prompt information is used to prompt whether to send the message content to N contacts that meet the preset condition, and N is a positive integer. The receiving module 405 is configured to receive a second input by the user for the second prompt information. The sending module 402 is specifically configured to, in response to the second input received by the receiving module 405, cancel sending the message content to the N contacts, and send the message content to contacts among the M contacts except the N contacts.

Optionally, the preset condition includes a first condition, a second condition, and a third condition. The determining module 404 is specifically configured to: determine whether the M contacts meet the first condition; in the case that among the M contacts, there are K contacts that do not meet the first condition, determine whether the K contacts meet a first target condition, where the first target condition is any one of the second condition and the third condition, and K is a positive integer less than M; and in the case that among the K contacts, there are P contacts that do not meet the first target condition, determine whether the P contacts meet a second target condition, where the second target condition is a condition of the second condition and the third condition except the first target condition, and P is a positive integer less than K.

The terminal device 400 provided by this embodiment of this disclosure can implement each process implemented by the terminal device in the foregoing method embodiment. To avoid repetition, details are not described herein again.

In the terminal device provided in this embodiment of this disclosure, firstly, the terminal device may obtain message content input by a user and contacts selected by the user. The terminal device may send the message content only to a contact that does not meet a preset condition among the contacts selected by the user, or the terminal device may send the preset content to a contact that meets the preset condition among the contacts selected by the user. Alternatively, the terminal device may send the message content to a contact that does not meet a preset condition among the contacts selected by the user, and send the preset content to a contact that meets the preset condition among the contacts selected by the user. The preset condition may filter contacts with a relatively high probability of mis-sending. Therefore, the terminal device may send the message content input by the user to a contact with a relatively low probability of mis-sending among the contacts selected by the user, and send the preset content to a contact with a relatively high probability of mis-sending among the contacts selected by the user (that is, not send the message content input by the user). In this way, the probability of mis-sending the message can be reduced, thereby reducing a probability of mis-sending important data.

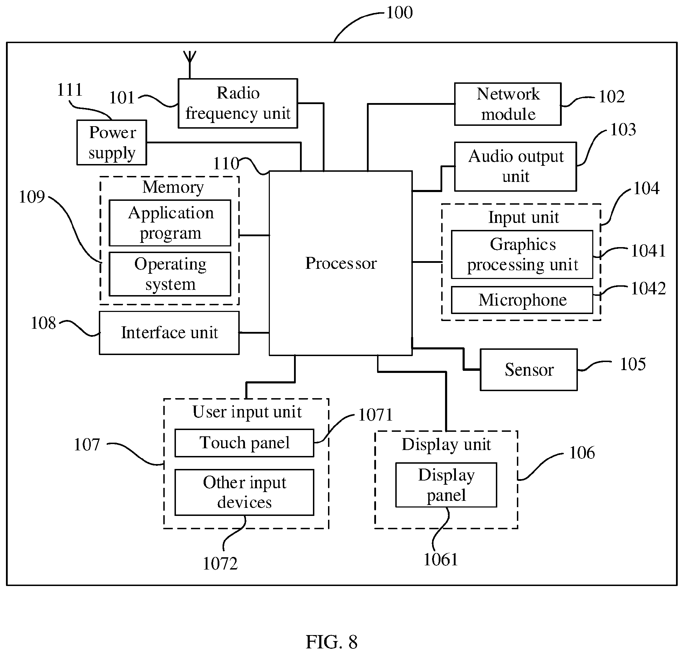

FIG. 8 is a schematic diagram of a hardware structure of a terminal device for implementing the embodiments of this disclosure. The terminal device 100 includes but is not limited to components such as a radio frequency unit 101, a network module 102, an audio output unit 103, an input unit 104, a sensor 105, a display unit 106, a user input unit 107, an interface unit 108, a memory 109, a processor 110, and a power supply 111. A person skilled in the art may understand that the structure of the terminal device shown in FIG. 8 does not constitute a limitation on the terminal device. A quantity of components included in the terminal device may be greater or less than that shown in the figure, or some components are combined, or component arrangements are different. In this embodiment of this disclosure, the terminal device includes but is not limited to a mobile phone, a tablet personal computer, a notebook computer, a palmtop computer, an in-vehicle terminal device, a wearable device, a pedometer, and the like.

The processor 110 is configured to obtain message content input by a user and contacts selected by the user. The radio frequency unit 101 is configured to send the message content to a contact that does not meet a preset condition among the contacts, and/or send preset content to a contact that meets the preset condition among the contacts.

In the terminal device provided in this embodiment of this disclosure, firstly, the terminal device may obtain message content input by a user and contacts selected by the user. The terminal device may send the message content only to a contact that does not meet a preset condition among the contacts selected by the user, or the terminal device may send the preset content to a contact that meets the preset condition among the contacts selected by the user. Alternatively, the terminal device may send the message content to a contact that does not meet a preset condition among the contacts selected by the user, and send the preset content to a contact that meets the preset condition among the contacts selected by the user. The preset condition may filter contacts with a relatively high probability of mis-sending. Therefore, the terminal device may send the message content input by the user to a contact with a relatively low probability of mis-sending among the contacts selected by the user, and send the preset content to a contact with a relatively high probability of mis-sending among the contacts selected by the user (that is, not send the message content input by the user). In this way, the probability of mis-sending the message can be reduced, thereby reducing a probability of mis-sending important data.

It should be understood that in this embodiment of this disclosure, the radio frequency unit 101 may be configured to send or receive a signal in an information sending/receiving or call process. Specifically, the radio frequency unit 101 receives downlink data from a base station and sends the downlink data to the processor 110 for processing; and sends uplink data to the base station. Typically, the radio frequency unit 101 includes but is not limited to an antenna, at least one amplifier, a transceiver, a coupler, a low noise amplifier, a duplexer, and the like. In addition, the radio frequency unit 101 may further communicate with a network and another device through a wireless communications system.

The terminal device provides the user with wireless broadband Internet access by using the network module 102, for example, helping the user send or receive an email, browse a web page, and access streaming media.

The audio output unit 103 may convert audio data received by the radio frequency unit 101 or the network module 102 or stored in the memory 109 into an audio signal and output the audio signal as a sound. In addition, the audio output unit 103 may further provide audio output (for example, a call signal received sound or a message received sound) related to a specific function performed by the terminal device 100. The audio output unit 103 includes a speaker, a buzzer, a telephone receiver, and the like.

The input unit 104 is configured to receive an audio or video signal. The input unit 104 may include a graphics processing unit (Graphics Processing Unit, GPU) 1041 and a microphone 1042. The graphics processing unit 1041 processes image data of a static picture or a video that is obtained by an image capture apparatus (for example, a camera) in a video capture mode or an image capture mode. A processed image frame may be displayed on the display unit 106. The image frame processed by the graphics processing unit 1041 may be stored in the memory 109 (or another storage medium) or sent by using the radio frequency unit 101 or the network module 102. The microphone 1042 can receive a sound and can process the sound into audio data. The processed audio data can be converted in a telephone call mode into a format that can be sent to a mobile communication base station through the radio frequency unit 101, for outputting.

The terminal device 100 further includes at least one sensor 105, for example, an optical sensor, a motion sensor, and other sensors. Specifically, the optical sensor may include an ambient light sensor and a proximity sensor. The ambient light sensor may adjust luminance of the display panel 1061 based on brightness of ambient light, and the proximity sensor may turn off the display panel 1061 and/or backlight when the terminal device 100 moves close to an ear. As a type of motion sensor, an accelerometer sensor can detect magnitudes of accelerations in all directions (usually three axes), can detect a magnitude and a direction of gravity when the terminal device is in a static state, and can be applied to posture recognition (such as screen switching between portrait and landscape, related games, and magnetometer posture calibration) of the terminal device, functions related to vibration recognition (such as pedometer and tapping), and the like. The sensor 105 may also include a fingerprint sensor, a pressure sensor, an iris sensor, a molecular sensor, a gyroscope, a barometer, a hygrometer, a thermometer, an infrared sensor, and the like. Details are not described herein.

The display unit 106 is configured to display information input by the user or information provided to the user. The display unit 106 may include the display panel 1061. The display panel 1061 may be configured in a form of a liquid crystal display (Liquid Crystal Display, LCD), an organic light-emitting diode (Organic Light-Emitting Diode, OLED), or the like.

The user input unit 107 may be configured to receive input digit or character information, and generate key signal input that is related to user setting and function control of the terminal device. Specifically, the user input unit 107 may include a touch panel 1071 and other input devices 1072. The touch panel 1071, also referred to as a touchscreen, may capture a touch operation performed by a user on or near the touch panel (for example, an operation performed by the user on the touch panel 1071 or near the touch panel 1071 by using any appropriate object or accessory such as a finger or a stylus). The touch panel 1071 may include two parts: a touch detection apparatus and a touch controller. The touch detection apparatus detects a touch of the user, detects a signal brought by the touch operation, and transmits the signal to the touch controller. The touch controller receives touch information from the touch detection apparatus, converts the touch information into touch point coordinates, transmits the touch point coordinates to the processor 110, and receives and executes a command transmitted by the processor 110. In addition, the touch panel 1071 may be implemented in a plurality of forms, for example, as a resistive, capacitive, infrared, or surface acoustic wave touch panel. The user input unit 107 may further include other input devices 1072 in addition to the touch panel 1071. Specifically, the other input devices 1072 may include but are not limited to a physical keyboard, a function key (for example, a volume control key or a switch key), a trackball, a mouse, and a joystick. Details are not described herein.

Further, the touch panel 1071 may cover the display panel 1061. When detecting a touch operation on or near the touch panel 1071, the touch panel 1071 transmits the touch operation to the processor 110 for determining a type of the touch event. Then, the processor 110 provides a corresponding visual output on the display panel 1061 based on the type of the touch event. In FIG. 8, the touch panel 1071 and the display panel 1061 serve as two separate components to implement input and output functions of the terminal device. However, in some embodiments, the touch panel 1071 and the display panel 1061 may be integrated to implement the input and output functions of the terminal device. This is not specifically limited herein.

The interface unit 108 is an interface for connecting an external apparatus to the terminal device 100. For example, the external apparatus may include a wired or wireless headphone port, an external power supply (or battery charger) port, a wired or wireless data port, a memory card port, a port for connecting an apparatus with an identification module, an audio input/output (I/O) port, a video I/O port, an earphone port, or the like. The interface unit 108 may be configured to receive an input (for example, data information or electric power) from an external apparatus and transmit the received input to one or more elements within the terminal device 100, or may be configured to transmit data between the terminal device 100 and the external apparatus.

The memory 109 may be configured to store software programs and various data. The memory 109 may mainly include a program storage region and a data storage region. The program storage region may store an operating system, an application program required by at least one function (for example, an audio play function or an image play function), and the like. The data storage region may store data (for example, audio data and a phone book) created based on usage of the mobile phone. In addition, the memory 109 may include a high-speed random access memory, or may further include a nonvolatile memory, for example, at least one magnetic disk storage device, a flash memory device, or another volatile solid-state storage device.

The processor 110 is a control center of the terminal device, which uses various interfaces and lines to connect all parts of the entire terminal device, and performs various functions and data processing of the terminal device by running or executing the software programs and/or modules stored in the memory 109 and invoking data stored in the memory 109, so as to perform overall monitoring on the terminal device. The processor 110 may include one or more processing units. Optionally, the processor 110 may integrate an application processor and a modem processor. The application processor mainly processes an operating system, a user interface, an application program, and the like. The modem processor mainly processes wireless communication. It can be understood that the modem processor may alternatively be not integrated in the processor 110.

The terminal device 100 may further include a power supply 111 (for example, a battery) that supplies power to the components. Optionally, the power supply 111 may be logically connected to the processor 110 through a power management system, so as to implement functions such as charging management, discharging management, and power consumption management through the power management system.

In addition, the terminal device 100 includes some functional modules that are not illustrated. Details are not described herein.

Optionally, with reference to FIG. 8, an embodiment of this disclosure further provides a terminal device, including: a processor 110, a memory 109, and a computer program that is stored in the memory 109 and executable on the processor 110. When the computer program is executed by the processor 110, the processes of the foregoing embodiments of the message sending method are implemented, with the same technical effects achieved. To avoid repetition, details are not described herein again.

An embodiment of this disclosure further provides a computer-readable storage medium, where the computer-readable storage medium stores a computer program. When the computer program is executed by a processor, the processes of the foregoing embodiments of the message sending method are implemented, with the same technical effects achieved. To avoid repetition, details are not described herein again. For example, the computer-readable storage medium is a read-only memory (Read-Only Memory, ROM), a random access memory (Random Access Memory, RAM), a magnetic disk, or an optical disk.

It should be noted that in this specification, the term "comprise", "include", or any other variant thereof is intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

According to the description of the foregoing implementations, persons skilled in the art can clearly understand that the method in the foregoing embodiments may be implemented by software on a necessary universal hardware platform or by hardware only. In most cases, the former is a preferred implementation. Based on such an understanding, the technical solutions of this disclosure essentially, or the part contributing to the related art may be implemented in a form of a software product. The computer software product is stored in a storage medium (for example, a ROM/RAM, a magnetic disk, or an optical disc), and includes several instructions for instructing a terminal device (which may be a mobile phone, a computer, a server, an air conditioner, a network device, or the like) to perform the methods described in the embodiments of this disclosure.

## Claims

1. A message sending method, applied to a terminal device, wherein the method comprises:
obtaining (S201) message content input by a user and contacts selected by the user; and
sending (S202) the message content to a contact that does not meet a preset condition among the contacts, **characterised in that** the method further comprises:
sending (S202) preset content to a contact that meets the preset condition among the contacts, wherein
after sending the message content and the preset content, the method further comprises:
displaying first prompt information, wherein the first prompt information is used to prompt whether to send the message content to the contact that meets the preset condition.

2. The method according to claim 1, wherein the preset condition comprises at least one of a first condition, a second condition, and a third condition, wherein
the first condition is that a message time interval is greater than or equal to a target time interval;
the second condition is that a contact identification comprises a first keyword, and that the message content comprises a second keyword; and
the third condition is that the message content comprises a third keyword, and that an intimacy index is less than or equal to a target intimacy index corresponding to the third keyword, wherein
the message time interval is a time interval between the last time the user sent a message to a contact and a system time of the terminal device; the first keyword is associated with a target keyword set, and the second keyword is a keyword in the target keyword set; and the third keyword indicates a degree of intimacy or indicates private information, and the intimacy index is a frequency of contact between the user and a contact within a preset period of time.

3. The method according to claim 2, wherein the obtaining (S201) message content input by a user and contacts selected by the user comprises:
in a case that a first input is received, obtaining message content input by a user and contacts selected by the user, wherein
the first input is an input of the message content input by the user in an input area, or an input that the user triggers the terminal device to select a contact and send the message content.

4. The method according to claim 2, wherein after the obtaining (S201) message content input by a user and contacts selected by the user, the method further comprises:
determining whether M contacts meet the preset condition, wherein
the M contacts are contacts selected by the user, and M is a positive integer.

5. The method according to claim 4, wherein after the determining whether M contacts meet the preset condition, the method further comprises:
displaying second prompt information, wherein the second prompt information is used to prompt whether to send the message content to N contacts that meet the preset condition, and N is a positive integer; and
receiving a second input by the user for the second prompt information; and
the sending (S202) the message content to a contact that does not meet a preset condition among the contacts comprises:
in response to the second input, canceling sending the message content to N contacts, and sending the message content to contacts among the M contacts except the N contacts.

6. The method according to claim 4, wherein the preset condition comprises the first condition, the second condition, and the third condition, and the determining whether the M contacts meet the preset condition comprises:
determining whether the M contacts meet the first condition;
in the case that among the M contacts, there are K contacts that do not meet the first condition, determining whether the K contacts meet a first target condition, wherein the first target condition is any one of the second condition and the third condition, and K is a positive integer less than M; and
in the case that among the K contacts, there are P contacts that do not meet the first target condition, determining whether the P contacts meet a second target condition, wherein the second target condition is a condition of the second condition and the third condition except the first target condition, and P is a positive integer less than K.

7. A terminal device (400), wherein the terminal device (400) comprises an obtaining module (401) and a sending module (402), wherein
the obtaining module (401) is configured to obtain message content input by a user and contacts selected by the user; and
the sending module (402) is configured to send the message content to a contact that does not meet a preset condition among the contacts, **characterised in that** the terminal is further configured to:
send preset content to a contact that meets the preset condition among the contacts, wherein
the terminal device (400) further comprises a display module (403), wherein
the display module (403) is configured to, after the sending module (402) sends the message content and the preset content, display first prompt information, wherein the first prompt information is used to prompt whether to send the message content to the contact that meets the preset condition.

8. The terminal device (400) according to claim 7, wherein the preset condition comprises at least one of a first condition, a second condition, and a third condition, wherein
the first condition is that a message time interval is greater than or equal to a target time interval;
the second condition is that a contact identification comprises a first keyword, and that the message content comprises a second keyword; and
the third condition is that the message content comprises a third keyword, and that an intimacy index is less than or equal to a target intimacy index corresponding to the third keyword, wherein
the message time interval is a time interval between the last time the user sent a message to a contact and a system time of the terminal device (400); the first keyword is associated with a target keyword set, and the second keyword is a keyword in the target keyword set; and the third keyword indicates a degree of intimacy or indicates private information, and the intimacy index is a frequency of contact between the user and a contact within a preset period of time.

9. The terminal device (400) according to claim 8, wherein the obtaining module (401) is specifically configured to:
in a case that a first input is received, obtain message content input by a user and contacts selected by the user, wherein
the first input is an input of the message content input by the user in an input area, or an input that the user triggers the terminal device (400) to select a contact and send the message content.

10. The terminal device (400) according to claim 8, wherein the terminal device (400) further comprises a determining module (404), wherein
the determining module (404) is configured to, after the obtaining module (401) obtains the message content input by the user and contacts selected by the user, determine whether M contacts meet the preset condition, wherein
the M contacts are contacts selected by the user, and M is a positive integer.

11. The terminal device (400) according to claim 10, wherein the terminal device (400) further comprises a display module (403) and a receiving module (405), wherein
the display module (403) is configured to, after the determining module (404) determines whether the M contacts meet the preset condition, display second prompt information, wherein the second prompt information is used to prompt whether to send the message content to N contacts that meet the preset condition, and N is a positive integer;
the receiving module (405) is configured to receive a second input by the user for the second prompt information; and
the sending module (402) is specifically configured to, in response to the second input received by the receiving module (405), cancel sending the message content to the N contacts, and send the message content to contacts among the M contacts except the N contacts.

12. The terminal device (400) according to claim 10, wherein the preset condition comprises the first condition, the second condition, and the third condition; and the determining module (404) is specifically configured to:
determine whether the M contacts meet the first condition;
in the case that among the M contacts, there are K contacts that do not meet the first condition, determine whether the K contacts meet a first target condition, wherein the first target condition is any one of the second condition and the third condition, and K is a positive integer less than M; and
in the case that among the K contacts, there are P contacts that do not meet the first target condition, determine whether the P contacts meet a second target condition, wherein the second target condition is a condition of the second condition and the third condition except the first target condition, and P is a positive integer less than K.

## Patentansprüche

1. Nachrichtensendeverfahren, angewandt auf eine Endgerätvorrichtung, wobei
das Verfahren Folgendes umfasst:
Erlangen (S201) von Nachrichteninhalt, der von einem Benutzer eingegeben wird, und von Kontakten, die von dem Benutzer ausgewählt werden; und
Senden (S202) des Nachrichteninhalts an einen Kontakt, der eine voreingestellte Bedingung unter den Kontakten nicht erfüllt, **dadurch gekennzeichnet, dass** das Verfahren ferner Folgendes umfasst:
Senden (S202) von voreingestelltem Inhalt an einen Kontakt, der die voreingestellte Bedingung unter den Kontakten, wobei
nach Senden des Nachrichteninhalts und des voreingestellten Inhalts, das Verfahren ferner Folgendes umfasst:
Anzeigen erster Aufforderungsinformationen, wobei die ersten Aufforderungsinformationen verwendet werden, um abzufragen, ob der Nachrichteninhalt an den Kontakt gesendet werden soll, der die voreingestellte Bedingung erfüllt.

2. Verfahren nach Anspruch 1, wobei die voreingestellte Bedingung mindestens eine von einer ersten Bedingung, einer zweiten Bedingung und einer dritten Bedingung umfasst, wobei
die erste Bedingung ist, dass ein Nachrichtenzeitintervall größer als oder gleich wie ein Zielzeitintervall ist;
die zweite Bedingung ist, dass eine Kontaktidentifikation ein erstes Schlüsselwort umfasst und dass der Nachrichteninhalt ein zweites Schlüsselwort umfasst; und
die dritte Bedingung ist, dass der Nachrichteninhalt ein drittes Schlüsselwort umfasst, und dass ein Intimitätsindex kleiner als oder gleich wie einem Soll-Intimitätsindex ist, der dem dritten Schlüsselwort entspricht, wobei
das Nachrichtenzeitintervall ein Zeitintervall zwischen dem letzten Zeitpunkt, an dem der Benutzer eine Nachricht an einen Kontakt gesendet hat, und einer Systemzeit der Endgerätvorrichtung ist; das erste Schlüsselwort mit einem Soll-Schlüsselwortsatz assoziiert ist und das zweite Schlüsselwort ein Schlüsselwort in dem Soll-Schlüsselwortsatz ist; und das dritte Schlüsselwort einen Grad an Intimität angibt oder private Informationen angibt, und der Intimitätsindex eine Häufigkeit eines Kontakts zwischen dem Benutzer und einem Kontakt innerhalb einer voreingestellten Zeitperiode ist.

3. Verfahren nach Anspruch 2, wobei das Erlangen (S201) des von einem Benutzer eingegebenen Nachrichteninhalts und der von dem Benutzer ausgewählten Kontakte Folgendes umfasst:
in einem Fall, in dem eine erste Eingabe empfangen wird, Erlangen von Nachrichteninhalte, der von einem Benutzer eingegeben wird, und von Kontakten, die von dem Benutzer ausgewählt werden, wobei
die erste Eingabe eine Eingabe des Nachrichteninhalts, der von dem Benutzer in einem Eingabebereich eingegeben wird, oder eine Eingabe, durch die der Benutzer die Endgerätvorrichtung veranlasst, einen Kontakt auszuwählen und den Nachrichteninhalt zu senden.

4. Verfahren nach Anspruch 2, wobei das Verfahren nach dem Erlangen (S201) von Nachrichteninhalten, die von einem Benutzer eingegeben werden, und von Kontakten, die von dem Benutzer ausgewählt werden, ferner Folgendes umfasst:
Bestimmen, ob M Kontakte die voreingestellte Bedingung erfüllen, wobei
die M Kontakte Kontakte sind, die von dem Benutzer ausgewählt werden, und M eine positive ganze Zahl ist.

5. Verfahren nach Anspruch 4, wobei das Verfahren nach dem Bestimmen, ob M Kontakte die voreingestellte Bedingung erfüllen, ferner Folgendes umfasst:
Anzeigen von zweiten Aufforderungsinformationen, wobei die zweiten Aufforderungsinformationen verwendet werden, um abzufragen, ob der Nachrichteninhalt an N Kontakte gesendet werden soll, die die voreingestellte Bedingung erfüllen, und N eine positive ganze Zahl ist; und
Empfangen einer zweiten Eingabe durch den Benutzer für die zweiten Aufforderungsinformationen; und
wobei das Senden (S202) des Nachrichteninhalts an einen Kontakt, der eine voreingestellte Bedingung unter den Kontakten nicht erfüllt, Folgendes umfasst:
als Reaktion auf die zweite Eingabe, Abbrechen des Sendens des Nachrichteninhalts an N Kontakte und Senden des Nachrichteninhalts an die übrigen M-Kontakte.

6. Verfahren nach Anspruch 4, wobei die voreingestellte Bedingung die erste Bedingung, die zweite Bedingung und die dritte Bedingung umfasst, und das Bestimmen, ob die M-Kontakte die voreingestellte Bedingung erfüllen, Folgendes umfasst:
Bestimmen, ob die M-Kontakte die erste Bedingung erfüllen;
in dem Fall, dass es unter den M Kontakten K Kontakte gibt, die die erste Bedingung nicht erfüllen, Bestimmen, ob die K Kontakte eine erste Sollbedingung erfüllen, wobei die erste Sollbedingung entweder die zweite Bedingung oder die dritte Bedingung ist und K eine positive ganze Zahl kleiner als M ist; und
in dem Fall, dass es unter den K Kontakten P Kontakte gibt, die die erste Sollbedingung nicht erfüllen, zu bestimmen, ob die P Kontakte eine zweite Sollbedingung erfüllen, wobei die zweite Sollbedingung eine Bedingung der zweiten und dritten Bedingung unter Ausschluss der ersten Sollbedingung ist und P eine positive ganze Zahl kleiner als K ist.

7. Endgerätvorrichtung (400), wobei
die Endgerätvorrichtung (400) ein
Erlangungsmodul (401) und ein Sendemodul (402) umfasst, wobei
das Erlangungsmodul (401) konfiguriert ist, um von einem Benutzer eingegebenen Nachrichteninhalt und von dem Benutzer ausgewählte Kontakte zu erlangen; und
das Sendemodul (402) konfiguriert ist, um den Nachrichteninhalt an einen Kontakt zu senden, der eine voreingestellte Bedingung unter den Kontakten nicht erfüllt, **dadurch gekennzeichnet, dass** die Endgerätvorrichtung ferner zu Folgendem konfiguriert ist:
Senden eines voreingestellten Inhalts an einen
Kontakt, der die voreingestellte Bedingung unter den Kontakten erfüllt, wobei
die Endgerätvorrichtung (400) ferner ein Anzeigemodul (403) umfasst, wobei
das Anzeigemodul (403) konfiguriert ist, um nach Senden des Nachrichteninhalts und des voreingestellten Inhalts durch das Sendemodul (402) erste Aufforderungsinformationen anzuzeigen, wobei die ersten Aufforderungsinformationen verwendet werden, um abzufragen, ob der Nachrichteninhalt an den Kontakt gesendet werden soll, der die voreingestellte Bedingung erfüllt.

8. Endgerätvorrichtung (400) nach Anspruch 7, wobei die voreingestellte Bedingung mindestens eine von einer ersten Bedingung, einer zweiten Bedingung und einer dritten Bedingung umfasst, wobei
die erste Bedingung ist, dass ein Nachrichtenzeitintervall größer als oder gleich wie ein Zielzeitintervall ist;
die zweite Bedingung ist, dass eine Kontaktidentifikation ein erstes Schlüsselwort umfasst und dass der Nachrichteninhalt ein zweites Schlüsselwort umfasst; und
die dritte Bedingung ist, dass der Nachrichteninhalt ein drittes Schlüsselwort umfasst, und dass ein Intimitätsindex kleiner oder gleich wie einem Soll-Intimitätsindex ist, der dem dritten Schlüsselwort entspricht, wobei
das Nachrichtenzeitintervall ein Zeitintervall zwischen dem letzten Zeitpunkt, an dem der Benutzer eine Nachricht an einen Kontakt gesendet hat, und einer Systemzeit der Endgerätvorrichtung (400) ist; das erste Schlüsselwort mit einem Soll-Schlüsselwortsatz assoziiert ist und das zweite Schlüsselwort ein Schlüsselwort in dem Soll-Schlüsselwortsatz ist; und das dritte Schlüsselwort einen Grad an Intimität angibt oder private Informationen angibt, und der Intimitätsindex eine Häufigkeit eines Kontakts zwischen dem Benutzer und einem Kontakt innerhalb einer voreingestellten Zeitperiode ist.

9. Endgerätvorrichtung (400) nach Anspruch 8, wobei das Erlangungsmodul (401) spezifisch zu Folgendem konfiguriert ist:
in einem Fall, in dem eine erste Eingabe empfangen wird, Erlangen von Nachrichteninhalt, der von einem Benutzer eingegeben wird, und von Kontakten, die von dem Benutzer ausgewählt werden, wobei
die erste Eingabe eine Eingabe des Nachrichteninhalts, der von dem Benutzer in einem Eingabebereich eingegeben wird, oder eine Eingabe, mit der der Benutzer die Endgerätvorrichtung (400) veranlasst, einen Kontakt auszuwählen und den Nachrichteninhalt zu senden.

10. Endgerätvorrichtung (400) nach Anspruch 8, wobei die Endgerätvorrichtung (400) ferner ein Bestimmungsmodul (404) umfasst, wobei
das Bestimmungsmodul (404) konfiguriert ist, um, nach Erlangen des von dem Benutzer eingegebenen Nachrichteninhalts durch das Erfassungsmodul (401) und der durch den Benutzer ausgewählten Kontakte, zu bestimmen, ob M Kontakte die voreingestellte Bedingung erfüllen, wobei
die M Kontakte Kontakte sind, die von dem Benutzer ausgewählt werden, und M eine positive ganze Zahl ist.

11. Endgerätvorrichtung (400) nach Anspruch 10, wobei die Endgerätvorrichtung (400) ferner ein Anzeigemodul (403) und ein Empfangsmodul (405) umfasst, wobei
das Anzeigemodul (403) konfiguriert ist, um, nachdem das Bestimmungsmodul (404) bestimmt hat, ob die M Kontakte die voreingestellte Bedingung erfüllen, zweite Aufforderungsinformationen anzuzeigen, wobei die zweiten Aufforderungsinformationen verwendet werden, um abzufragen, ob der Nachrichteninhalt an N Kontakte gesendet werden soll, die die voreingestellte Bedingung erfüllen, und N eine positive ganze Zahl ist;
das Empfangsmodul (405) konfiguriert ist, um eine zweite Eingabe des Benutzers für die zweite Aufforderungsinformation zu empfangen; und
das Sendemodul (402) spezifisch konfiguriert ist, um als Reaktion auf die zweite Eingabe, die von dem Empfangsmodul (405) empfangen wird, ein Senden des Nachrichteninhalts an die N Kontakte abzubrechen und den Nachrichteninhalt an die übrigen M-Kontakte zu senden.

12. Endgerät (400) nach Anspruch 10, wobei die voreingestellte Bedingung die erste Bedingung, die zweite Bedingung und die dritte Bedingung umfasst; und das Bestimmungsmodul (404) spezifisch zu Folgendem konfiguriert ist:
Bestimmen, ob die M-Kontakte die erste Bedingung erfüllen;
in dem Fall, dass es unter den M Kontakten K Kontakte gibt, die die erste Bedingung nicht erfüllen, Bestimmen, ob die K Kontakte eine erste Sollbedingung erfüllen, wobei die erste Sollbedingung entweder die zweite Bedingung oder die dritte Bedingung ist und K eine positive ganze Zahl kleiner als M ist; und
in dem Fall, dass es unter den K Kontakten P Kontakte gibt, die die erste Sollbedingung nicht erfüllen, Bestimmen, ob die P Kontakte eine zweite Sollbedingung erfüllen, wobei die zweite Sollbedingung eine Bedingung der zweiten Bedingung und der dritten Bedingung außer der ersten Sollbedingung ist und P eine positive ganze Zahl kleiner als K ist.

## Revendications

1. Procédé d'envoi de messages, appliqué à un dispositif terminal, dans lequel
le procédé comprend :
l'acquisition (S201) d'un contenu de message saisi par un utilisateur et des contacts sélectionnés par l'utilisateur ; et
l'envoi (S202) du contenu de message à un contact qui ne remplit pas une condition prédéfinie parmi les contacts, **caractérisé en ce que** le procédé comprend en outre :
l'envoi (S202) d'un contenu prédéfini à un contact qui remplit la condition prédéterminée parmi les contacts, dans lequel
après l'envoi du contenu de message et du contenu prédéfini, le procédé comprend en outre :
l'affichage de premières informations d'invite, dans lequel les premières informations d'invite sont utilisées pour demander s'il faut envoyer le contenu de message au contact qui remplit la condition prédéfinie.

2. Procédé selon la revendication 1, dans lequel la condition prédéfinie comprend au moins une condition parmi une première condition, une deuxième condition et une troisième condition, dans lequel
la première condition est qu'un intervalle de temps de message soit supérieur ou égal à un intervalle de temps cible ;
la deuxième condition est qu'une identification de contact comprenne un premier mot-clé et que le contenu de message comprenne un deuxième mot-clé ; et
la troisième condition est que le contenu de message comprenne un troisième mot clé, et qu'un indice d'intimité soit inférieur ou égal à un indice d'intimité cible correspondant au troisième mot clé, dans lequel
l'intervalle de temps de message est un intervalle de temps entre la dernière fois que l'utilisateur a envoyé un message à un contact et une heure système du dispositif terminal ; le premier mot-clé est associé à un ensemble de mots-clés cibles, et le deuxième mot-clé est un mot-clé de l'ensemble de mots-clés cibles ; le troisième mot-clé indique un degré d'intimité ou des informations privées, et l'indice d'intimité est une fréquence de contact entre l'utilisateur et un contact au cours d'une période de temps prédéterminée.

3. Procédé selon la revendication 2, dans lequel l'acquisition (S201) d'un contenu de message saisi par un utilisateur et des contacts sélectionnés par l'utilisateur comprend :
dans un cas où une première entrée est reçue, l'acquisition du contenu d'un message saisi par un utilisateur et des contacts sélectionnés par l'utilisateur, dans lequel
la première entrée est une entrée du contenu de message saisie par l'utilisateur dans une zone de saisie, ou une entrée par laquelle l'utilisateur déclenche le dispositif terminal pour sélectionner un contact et envoyer le contenu de message.

4. Procédé selon la revendication 2, dans lequel, après l'acquisition (S201) d'un contenu du message saisi par un utilisateur et des contacts sélectionnés par l'utilisateur, le procédé comprend en outre :
la détermination si M contacts remplissent la condition prédéterminée, dans lequel
les M contacts sont des contacts sélectionnés par l'utilisateur, et M est un nombre entier positif.

5. Procédé selon la revendication 4, dans lequel, après la détermination si M contacts remplissent la condition prédéterminée, le procédé comprend en outre :
l'affichage de secondes informations d'invite, dans lequel les secondes informations d'invite sont utilisées pour demander s'il faut envoyer le contenu de message à N contacts qui remplissent la condition prédéfinie ; et N est un nombre entier positif ; et
la réception d'une seconde entrée de l'utilisateur pour les secondes informations d'invite ; et
l'envoi (S202) du contenu de message à un contact qui ne remplit pas une condition prédéfinie parmi les contacts comprend :
en réponse à la seconde entrée, l'annulation de l'envoi du contenu de message à N contacts, et l'envoi du contenu de message à des contacts parmi les M contacts, à l'exception des N contacts.

6. Procédé selon la revendication 4, dans lequel la condition prédéfinie comprend la première condition, la deuxième condition et la troisième condition, et la détermination si les M contacts remplissent la condition prédéterminée comprend :
la détermination si les M contacts remplissent la première condition ;
dans le cas où, parmi les M contacts, il existe K contacts qui ne remplissent pas la première condition, la détermination si les K contacts remplissent une première condition cible, dans lequel la première condition cible est l'une quelconque de la deuxième condition et de la troisième condition, et K est un nombre entier positif inférieur à M ; et
dans le cas où, parmi les K contacts, il existe P contacts qui ne remplissent pas la première condition cible, la détermination si les P contacts remplissent une seconde condition cible, dans lequel la seconde condition cible est une condition de la deuxième condition et de la troisième condition, à l'exception de la première condition cible, et P est un nombre entier positif inférieur à K.

7. Dispositif terminal (400), dans lequel
le dispositif terminal (400) comprend
un module d'acquisition (401) et un module d'envoi (402), dans lequel
le module d'acquisition (401) est configuré pour obtenir un contenu de message saisi par un utilisateur et des contacts sélectionnés par l'utilisateur ; et
le module d'envoi (402) est configuré pour envoyer le contenu de message à un contact qui ne remplit pas une condition prédéterminée parmi les contacts, **caractérisé en ce que** le terminal est en outre configuré pour :
envoyer un contenu prédéterminé à un
contact qui remplit la condition prédéterminée parmi les contacts, dans lequel
le dispositif terminal (400) comprend en outre un module d'affichage (403), dans lequel
le module d'affichage (403) est configuré pour, après que le module d'envoi (402) a envoyé le contenu de message et le contenu prédéterminé, afficher de premières informations d'invite, dans lequel les premières informations d'invite sont utilisées pour demander s'il faut envoyer le contenu de message au contact qui remplit la condition prédéterminée.

8. Dispositif terminal (400) selon la revendication 7, dans lequel la condition prédéterminée comprend au moins une condition parmi une première condition, une deuxième condition et une troisième condition, dans lequel
la première condition est qu'un intervalle de temps de message soit supérieur ou égal à un intervalle de temps cible ;
la deuxième condition est qu'une identification de contact comprenne un premier mot-clé et que le contenu de message comprenne un deuxième mot-clé ; et
la troisième condition est que le contenu de message comprenne un troisième mot clé, et qu'un indice d'intimité soit inférieur ou égal à un indice d'intimité cible correspondant au troisième mot clé, dans lequel
l'intervalle de temps de message est un intervalle de temps entre la dernière fois que l'utilisateur a envoyé un message à un contact et une heure système du dispositif terminal (400) ; le premier mot-clé est associé à un ensemble de mots-clés cibles, et le deuxième mot-clé est un mot-clé de l'ensemble de mots-clés cibles ; le troisième mot-clé indique un degré d'intimité ou des informations privées, et l'indice d'intimité est une fréquence de contact entre l'utilisateur et un contact au cours d'une période de temps prédéterminée.

9. Dispositif terminal (400) selon la revendication 8, dans lequel le module d'acquisition (401) est spécialement configuré pour :
dans un cas où une première entrée est reçue, acquérir un contenu de message saisi par un utilisateur et des contacts sélectionnés par l'utilisateur, dans lequel
la première entrée est une entrée du contenu de message saisie par l'utilisateur dans une zone de saisie, ou une entrée par laquelle l'utilisateur déclenche le dispositif terminal (400) pour sélectionner un contact et envoyer le contenu de message.

10. Dispositif terminal (400) selon la revendication 8, dans lequel le dispositif terminal (400) comprend en outre un module de détermination (404), dans lequel
le module de détermination (404) est configuré pour, après que le module d'acquisition (401) a obtenu le contenu de message saisi par l'utilisateur et les contacts sélectionnés par l'utilisateur, déterminer si M contacts remplissent la condition prédéterminée, dans lequel
les M contacts sont des contacts sélectionnés par l'utilisateur, et M est un nombre entier positif.

11. Dispositif terminal (400) selon la revendication 10, dans lequel le dispositif terminal (400) comprend en outre un module d'affichage (403) et un module de réception (405), dans lequel
le module d'affichage (403) est configuré pour, après que le module de détermination (404) a déterminé si les M contacts remplissent la condition prédéterminée, afficher de secondes informations d'invite, dans lequel les secondes informations d'invite sont utilisées pour demander s'il faut envoyer le contenu de message à N contacts qui remplissent la condition prédéterminée, et N est un nombre entier positif ;
le module de réception (405) est configuré pour recevoir une seconde entrée de l'utilisateur pour les secondes informations d'invite ; et
le module d'envoi (402) est spécifiquement configuré pour, en réponse à la seconde entrée reçue par le module de réception (405), annuler l'envoi du contenu de message aux N contacts et envoyer le contenu de message aux contacts parmi les M contacts, à l'exception des N contacts.

12. Dispositif terminal (400) selon la revendication 10, dans lequel la condition prédéterminée comprend la première condition, la deuxième condition et la troisième condition ; et le module de détermination (404) est spécifiquement configuré pour :
déterminer si les M contacts remplissent la première condition ;
dans le cas où, parmi les M contacts, il existe K contacts qui ne remplissent pas la première condition, déterminer si les K contacts remplissent une première condition cible, dans lequel la première condition cible est l'une quelconque de la deuxième condition et de la troisième condition, et K est un nombre entier positif inférieur à M ; et
dans le cas où, parmi les K contacts, il existe P contacts qui ne remplissent pas la première condition cible, déterminer si les P contacts remplissent une seconde condition cible, dans lequel la seconde condition cible est une condition de la deuxième condition et de la troisième condition, à l'exception de la première condition cible, et P est un nombre entier positif inférieur à K.
